# EUROPEAN PATENT SPECIFICATION

(11) **EP 0 404 451 B1**
(45) Date of publication and mention of the grant of the patent: **15.10.1997**
(21) Application number: 90306534.0
(22) Date of filing: 15.06.1990
(51) Int. Cl.: H04M 1/274

(54) **System utilizing a portable device for generating a telephone call**
System mit tragbarer Vorrichtung zur Erzeugung eines Telefonrufs
Système utilisant un dispositif portatif pour générer un appel téléphonique

(30) Priority: 16.06.1989 JP 154161/89; 05.07.1989 JP 173700/89; 05.07.1989 JP 173701/89; 05.07.1989 JP 173703/89
(43) Date of publication of application: 27.12.1990
(73) Proprietor: CANON KABUSHIKI KAISHA, Tokyo (JP)
(72) Inventor: Uno, Hiromichi, Shimomaruko, Ohta-ku, Tokyo (JP); Kurosawa, Yuji, Shimomaruko, Ohta-ku, Tokyo (JP)
(74) Representative: Beresford, Keith Denis Lewis

(56) References cited:
- EP-A- 0 115 240
- DE-A- 3 803 488
- US-A- 4 130 738
- US-A- 4 766 433
- US-A- 4 821 107
- PATENT ABSTRACTS OF JAPAN, vol. 11, no. 277 (E-538)[2724], 8th September 1987; & JP-A-62 77 742 (SAN TEREHON K.K.) 09-04-1987
- PATENT ABSTRACTS OF JAPAN, vol. 11, no. 374 (E-562)[2821], 5th December 1987; & JP-A-62 141 837 (NIPPON TEKUSA K.K.) 25-06-1987
- PATENT ABSTRACTS OF JAPAN, vol. 8, no. 229 (E-273)[1666], 20th October 1984; & JP-A-59 110 258 (FUJITSU K.K.) 26-06-1984
- PATENT ABSTRACTS OF JAPAN, vol. 12, no. 168 (E-611)[3015], 20th May 1988; & JP- A-62 278 854 (SHARP CORP.) 03-12-1987
- PATENT ABSTRACTS OF JAPAN, vol. 10, no. 352 (E-458)[2408], 27th November 1986; & JP-A-61 152 148 (NEC CORP.) 10-07-1986
- PATENT ABSTRACTS OF JAPAN, vol. 7, no. 17 (E-154)[1162], 22nd January 1983; & JP-A-57 173 264 (MATSUSHITA DENSOU KIKI K.K.) 25-10-1982
- PATENT ABSTRACTS OF JAPAN, vol. 7, no. 148 (E-184), 29th June 1983; & JP-A-58 060 874 (NIPPON DENKI K.K.) 11-04-1983
- PATENT ABSTRACTS OF JAPAN, vol. 12, no. 348 (E-659), 19th September 1988; & JP- A-63 105 544 (HITACHI LTD) 10-05-1988
- PATENT ABSTRACTS OF JAPAN, vol. 12, no. 461 (E-689), 5th December 1988; & JP-A- 63 185 157 (HIROMASA KOBAYASHI) 30-07-1988

## Description

The present invention relates to a system comprising a portable device storing data such as calling data, identification data, and the like, and an apparatus for receiving data from the portable device and processing the data.

A so-called electronic telephone directory for generating PB (push button) tones according to prestored telephone numbers is known. However, since a device of this type sends the generated PB tone from a speech transmission unit of a handset onto a line, a wrong party may often be called due to noise.

Some telephone sets can be electrically connected to an IC card storing telephone numbers through a connector. However, problems of a connection error of a connector unit, and breaking of pins of the connector unit are posed.

US Patent 4,130,738 discloses a portable device which, once a telephone line has been caught, for example, by removing the telephone handset, can remotely dial a number.

It is an object of the invention to improve a communication apparatus.

The invention provides a call generation apparatus in or on which a portable device can be placed, comprising: a keypad for input of a dial number; reception means for receiving optical signals from the portable device when in place; and sending means for sending a dial signal onto a line in accordance with matrix output signals from said keypad or optical signals from said reception means, characterized in that said reception means comprises a plurality of light receiving elements connected in parallel to corresponding matrix lines of the keypad, and the optical signal is input into the sending means as a keypad matrix signal; and in that the sending means further comprises means for catching the line in accordance with the output from said reception means before sending the dial signal.

The above and other features of the present invention will be apparent from the description of the embodiment.

### BRIEF DESCRIPTION OF THE DRAWINGS:

Fig. 1 is a plan view of a facsimile apparatus and an electronic telephone directory according to the first embodiment of the present invention;
Fig. 2 is a block diagram of a system according to the first embodiment of the present invention;
Fig. 3 is a block diagram of an LED light generation unit of the first embodiment;
Fig. 4 is a block diagram of a facsimile apparatus according to the second embodiment of the present invention;
Fig. 5 is a block diagram of an electronic telephone directory according to the second embodiment of the present invention;
Fig. 6 is a block diagram of an interface unit according to the second embodiment of the present invention;
Fig. 7 is a flow chart of the second embodiment;
Figs. 8 and 9 are timing charts of the second embodiment;
Fig. 10 is a block diagram of an interface unit according to the third embodiment of the present invention;
Fig. 11 is a flow chart of the third embodiment;
Fig. 12 is a timing chart of the third embodiment;
Fig. 13 is a flow chart of the third embodiment;
Fig. 14 is a block diagram of an interface unit according to the fourth embodiment of the present invention;
Fig. 15 is a flow chart of the fourth embodiment;
Fig. 16 is a timing chart of the fourth embodiment;
Fig. 17 is a block diagram of an interface unit according to the fifth embodiment of the present invention;

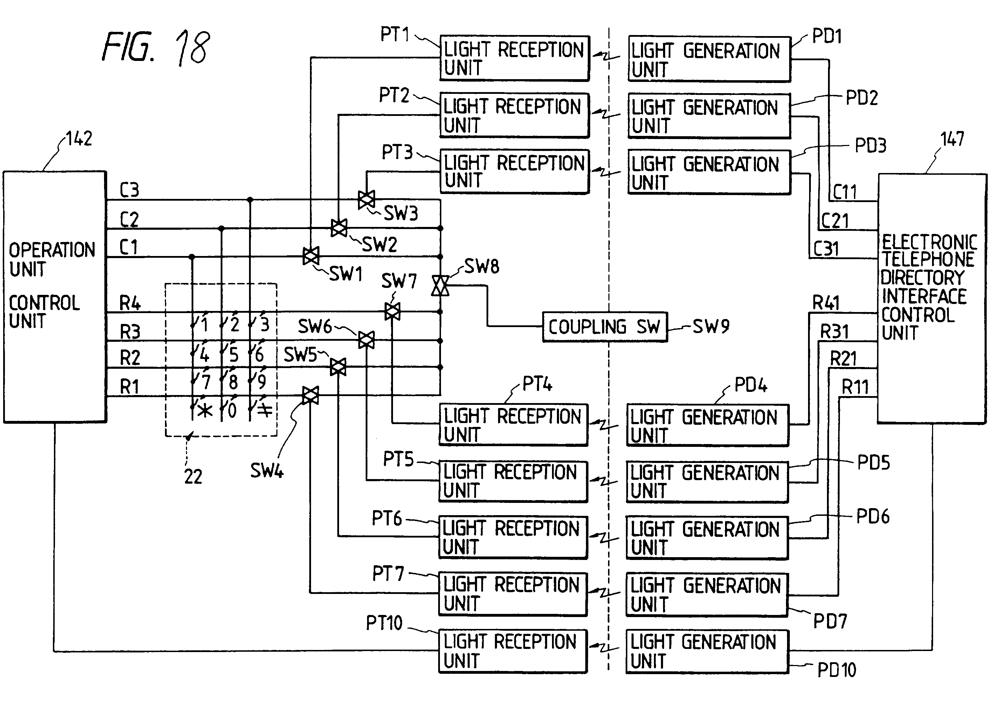

Fig. 18 is a block diagram of an interface unit according to the sixth embodiment of the present invention;
Fig. 19 is a timing chart of the sixth embodiment; and
Fig. 20 is a flow chart of the sixth embodiment.

### DETAILED DESCRIPTION OF THE PREFERRED EMBODIMENTS:

### [First Embodiment]

An IC card of this embodiment has a keyboard including kana keys, alphanumeric keys, and the like, and causes a light-emitting diode matrix to emit light according to a dial number input at the keyboard, thereby transmitting data to a facsimile apparatus. The IC card is detachable with the facsimile apparatus main body.

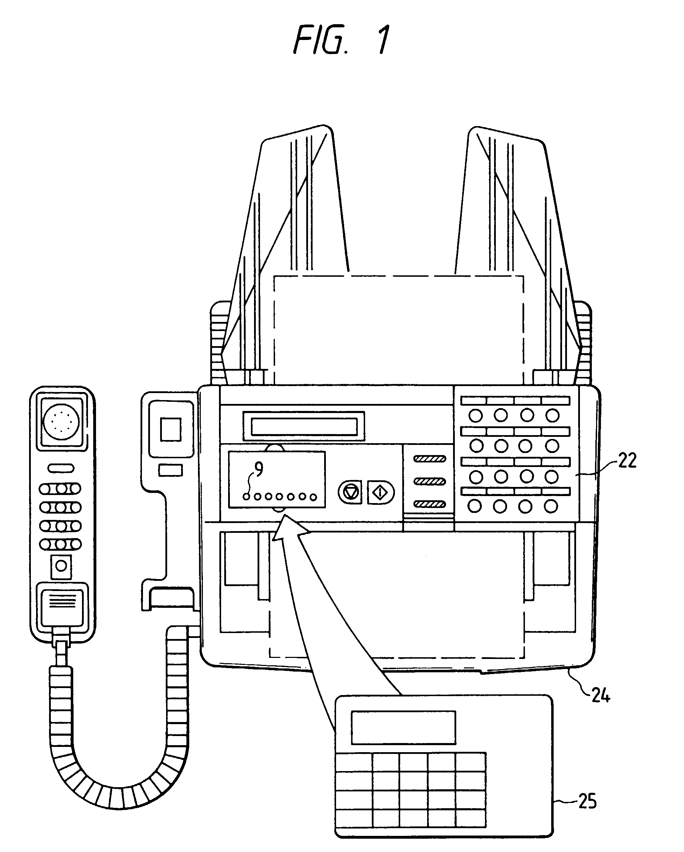

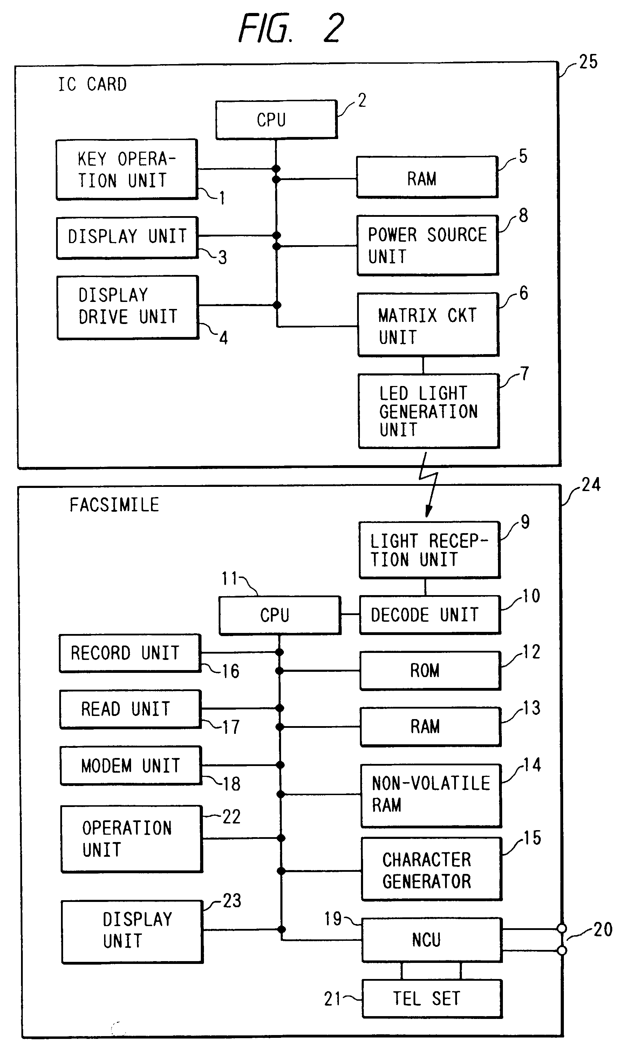

Figs. 1 and 2 are respectively a plan view and a block diagram of a system according to the first embodiment of the present invention.

An IC card 25 includes a key operation unit 1, a CPU (central processing unit) 2, a display unit 3, a display drive unit 4, a RAM (random access memory) 5, a matrix circuit unit 6, an LED (light-emitting diode) light generation unit 7, and a power source unit 8.

A facsimile apparatus 24 includes a light reception unit 9, a decode unit 10, a CPU 11, a ROM (read-only memory) 12, a RAM 13, a non-volatile RAM 14, a character generator 15, a record unit 16, a read unit 17, a modem unit 18, a network control unit (NCU) 19, a telephone line 20, a telephone set 21, an operation unit 22, and a display unit 23.

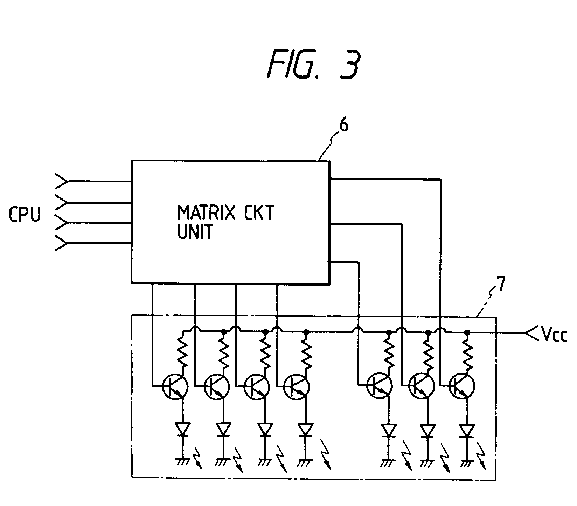

Fig. 3 is a block diagram of the LED light generation unit 7. The circuit shown in Fig. 3 includes the matrix circuit unit 6 and the LED light generation unit 7.

The CPU 11 controls the overall facsimile apparatus, i.e., the RAM 13, the non-volatile RAM 14, the character generator 15, the record unit 16, the read unit 17, the modem unit 18, the NCU 19, the operation unit 22, and the display unit 23 in accordance with a program stored in the ROM 12.

The RAM 13 stores binary image data read by the read unit 17, or binary image data to be recorded by the record unit 16. The RAM 13 stores binary image data modulated by the modem unit 18 and to be output onto the telephone line 20 via the NCU 19. The RAM 13 stores an analog waveform input from the telephone line 20 via the NCU 19 and demodulated by the modem unit 18 as binary data.

The non-volatile RAM 14 reliably stores data to be preserved when the power source of the facsimile apparatus is turned off. For example, the non-volatile RAM 14 registers destination names and destination telephone numbers input at the operation unit 22 in correspondence with each other.

The CPU 11 transmits a destination name according to an input destination telephone number to a destination receiver on the basis of the program stored in the ROM 12.

The character generator 15 is a ROM for storing characters in JIS codes or ASCII codes. The CPU 11 reads out character data from the character generator 15 using 2-byte data as needed.

The record unit 16 records and outputs recording data stored in the RAM 13 as a hard copy under the control of the CPU 11.

The read unit 17 binarizes read data under the control of the CPU 11, and sequentially sends the binary data to the RAM 13. Note that an original loading state of the read unit 17 can be detected by an original sensor such as a photosensor arranged along a convey path of an original. An original detection signal is input to the CPU 11.

The modem unit 18 modulates transmission data stored in the RAM 13 under the control of the CPU 11, and outputs the modulated data onto the telephone line 20 via the NCU 19. The modem unit 18 receives an analog signal on the telephone line 20 via the NCU 19, demodulates and binarizes the received signal, and stores the binary data in the RAM 13.

The NCU 19 selectively connects the telephone line to the modem unit 18 and the telephone set 21 under the control of the CPU 11.

The telephone set 21 is integrated with the facsimile apparatus, and comprises a handset, a speech network, a dialer, a ten-key pad, and the like.

The operation unit 22 includes a key for starting image transmission or reception, a mode selection key for designating an operation mode, e.g., a fine, standard, automatic reception modes, and the like during transmission/reception, a dialing ten-key pad, and the like. The CPU 11 detects depression states of these keys, and controls the corresponding units according to the detected states.

The display unit 23 comprises a liquid crystal display, and displays predetermined characters and the like under the control of the CPU 11.

In the IC card 25, characters, symbols, numerals, and the like are input using keys on the key operation unit 1. The CPU 2 controls the display drive unit 4 to display the key input content on the display unit 3. The RAM 5 stores key input data, and the stored data is read out as needed.

When the LED light generation unit 7 is caused to emit light upon key operations, a signal is sent from the CPU 2 to the matrix circuit unit 6, and the matrix circuit unit 6 then outputs a signal to the LED light generation unit 7, thereby causing the LEDs to emit light. This IC card includes the power source unit 8.

The LEDs of the LED light generation unit 7 emit light according to dial signals, and the light is received by the light reception unit 9. The light reception unit 9 causes the decode unit 10 to decode the received light into a signal to be transmitted to the CPU 11 of the facsimile main body.

In Fig. 3, data of dial signals are supplied from the CPU 2. Since there are 12 kinds of dial signal, i.e., 0, 1 to 9, *, and #, 4-bit dial signals are input to the matrix circuit unit 6.

The LED light generation unit 7 expresses 12 kinds of dial signal using seven LEDs. Twelve states can be expressed by sets of three LEDs and four LEDs.

As described above, the dial signal is output using the LEDs upon key operations, thus generating a call.

The LEDs may be directly driven by the CPU without going through the matrix circuit unit 6.

Since the dial signals are sent in the form of light signals generated by the LEDs, the signals will not be influenced by external noise between the LEDs and the light reception unit when the IC card is loaded, and a signal exchange error due to directivity will not occur. Therefore, accurate data exchange is allowed. Furthermore, since no contact system such as a connector is employed, wear or contact error caused by detachment/attachment will not occur.

The IC card 25 can be solely carried as a data memory device such as a telephone directory.

When the IC card is loaded in a terminal device such as a telephone set using a telephone line, the same effect as described above can be obtained.

### (Second Embodiment)

An electronic telephone directory of this embodiment adds and transmits a signal corresponding to "*" or "#" prior to transmission of a dial signal. Upon first reception of the signal corresponding to * or #, a communication apparatus waits for the dial signal from the electronic telephone directory. Furthermore, upon first reception of the signal corresponding to ∗ or #, the communication apparatus of this embodiment engages a telephone line.

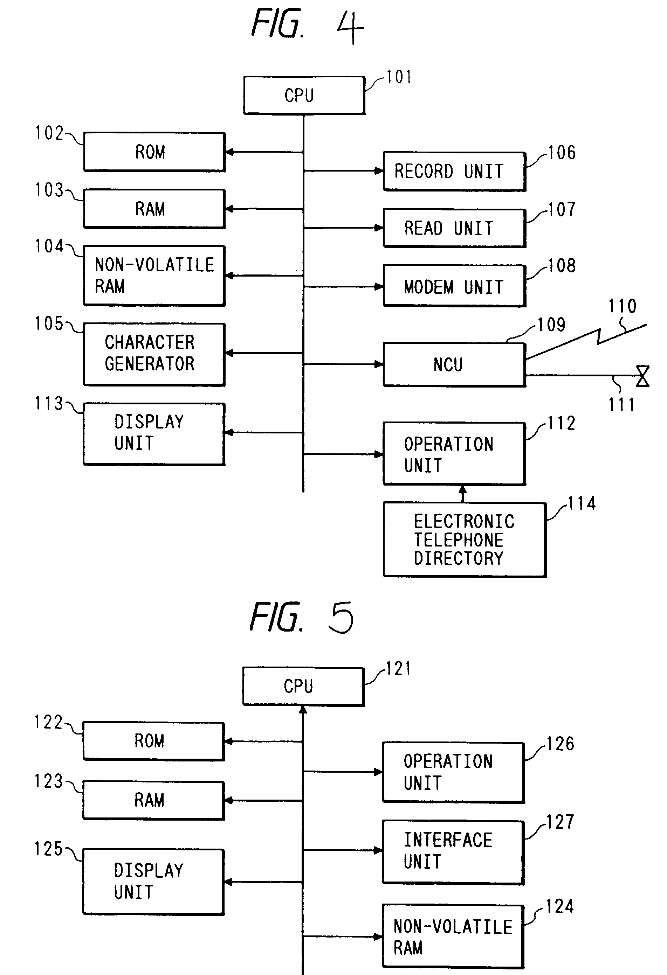

Fig. 4 is a block diagram showing a facsimile apparatus according to the second embodiment of the present invention.

A CPU 101 shown in Fig.4 comprises a microprocessor, and controls the overall facsimile apparatus, i.e., a RAM 103, a non-volatile RAM 104, a character generator (CG) 105, a record unit 106, a read unit 107, a modem unit 108, a network control unit (NCU) 109, an operation unit 112, and a display unit 113 in accordance with a program stored in a ROM 102.

The RAM 103 stores binary image data read by the read unit 107 or binary image data to be recorded by the record unit 106. The stored image data is modulated by the modem unit 108, and the modulated data is output onto a telephone line 110 through the NCU 109.

The RAM 103 stores an analog waveform input from the telephone line 110 via the NCU 109 and demodulated by the modem unit 108 as binary data.

The non-volatile RAM 104 reliably stores data to be preserved when the power source of the facsimile apparatus is turned off. For example, the non-volatile RAM 104 registers destination names and destination telephone numbers input at the operation unit 112 in correspondence with each other.

The CPU 101 transmits a destination name according to an input destination telephone number to a destination receiver on the basis of the program stored in the ROM 102.

The CG 105 is a ROM for storing characters in JIS codes or ASCII codes. The CPU 101 reads out character data from the CG using 2-byte data as needed.

The record unit 106 records and outputs recording data read out from the RAM 103 as a hard copy under the control of the CPU 101.

The read unit 107 binarizes read data under the control of the CPU 101, and sequentially sends the binary data to the RAM 103. Note that an original loading state of the read unit 107 can be detected by an original sensor such as a photosensor arranged along a convey path of an original. An original detection signal is input to the CPU 101.

The modem unit 108 modulates transmission data stored in the RAM 103 under the control of the CPU 101, and outputs the modulated data onto the telephone line 110 via the NCU 109. The modem unit 108 receives an analog signal on the telephone line 110 via the NCU 109, demodulates and binarizes the received signal, and stores the binary data in the RAM 103.

The NCU 109 selectively connects the telephone line to the modem unit 108 and a telephone set 111 under the control of the CPU 101.

The telephone set 111 is integrated with the facsimile apparatus, and comprises a handset, a speech network, a dialer, and the like.

The operation unit 112 includes a key for starting image transmission or reception, a mode selection key for designating an operation mode, e.g., a fine, standard, automatic reception modes, and the like during transmission/reception, a dialing ten-key pad, and the like. The CPU 101 detects depression states of these keys, and controls the corresponding units according to the detected states.

The display unit 113 comprises a liquid crystal display, and displays predetermined characters and the like under the control of the CPU 101.

The electronic telephone directory 114 is connected to the operation unit 112 through an interface circuit.

Fig. 5 is a block diagram of the electronic telephone directory. A CPU 121 controls the electronic telephone directory according to a program stored in a ROM 122. The ROM 122 also stores character codes, and the like. A non-volatile RAM 124 stores data such as telephone numbers, names, and the like. A display unit 125 comprises a liquid crystal display. An operation unit 126 is used when a user registers telephone numbers, names, and the like. An interface unit 127 interfaces with a communication apparatus to which the electronic telephone directory is attached, and comprises LEDs for performing optical communications.

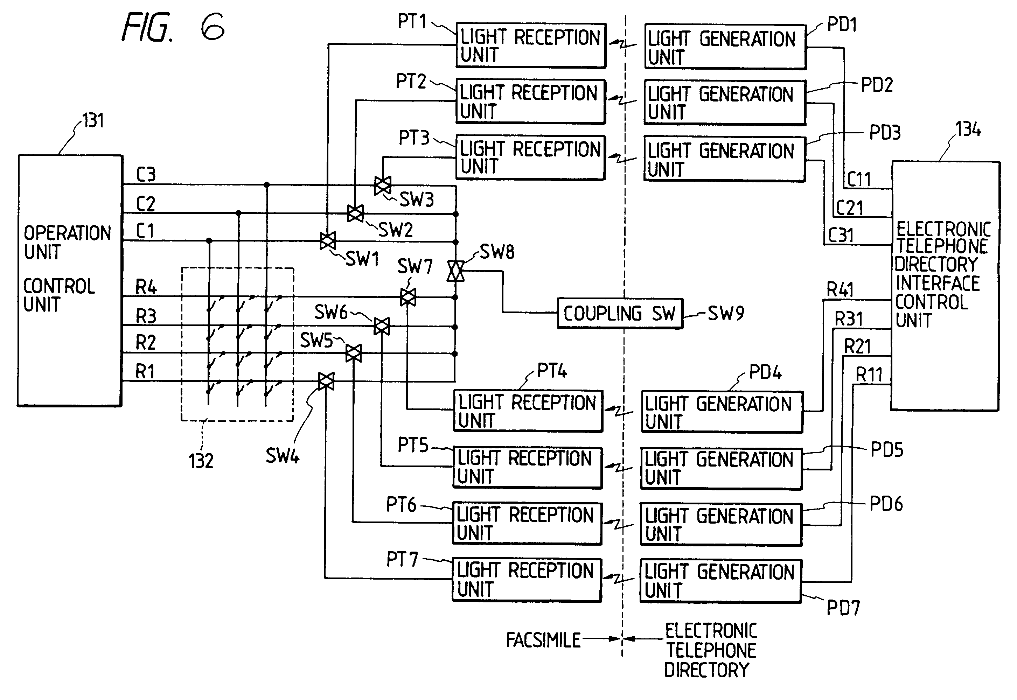

This embodiment will be described in detail below. Fig. 6 is a block diagram of an interface portion between the operation unit 112 and the electronic telephone directory 114. A control unit 131 for the operation unit 112 of the facsimile apparatus monitors depression of keys in a ten-key unit 132. A control unit 134 controls the interface unit 127 of the electronic telephone directory.

When dial signals from the electronic telephone directory interface control unit 134 are transmitted as electrical signals in a predetermined pattern through signal lines C11, C21, C31, R11, R21, R31, and R41, light generation units (PD1 to PD7) convert the corresponding electrical signals into light signals. Light reception units (PT1 to PT7) of the facsimile apparatus convert these light signals into electrical signals. Switches SW1 to SW7 decode the corresponding signals and convert them into key depression signals of the ten-key unit. The switches SW1 to SW7 then supply these signals to the operation unit control unit 131.

A switch SW9 is a coupling monitoring switch which monitors whether or not the electronic telephone directory 114 is attached to the operation unit 112. When the electronic telephone directory 114 is attached, the switch SW9 enables a switch SW8, thereby enabling the switches SW1 to SW7. In this case, the ten-key depression signals are sent to the operation unit control unit 131. When the electronic telephone directory 114 is detached, the switch SW9 disables the switch SW8. In this case, no ten-key depression signals are input from the electronic telephone directory 114 to the operation unit control unit 131 at all regardless of the enabled/disabled state of the switches SW1 to SW7. Thus, when the electronic telephone directory 114 is detached, the light reception units (PT1 to PT7) can be prevented from being erroneously operated due to external light, and wrong ten-key depression signals (dial signals) can be prevented from being input to the operation unit control unit 131.

The operation of this embodiment will be described below.

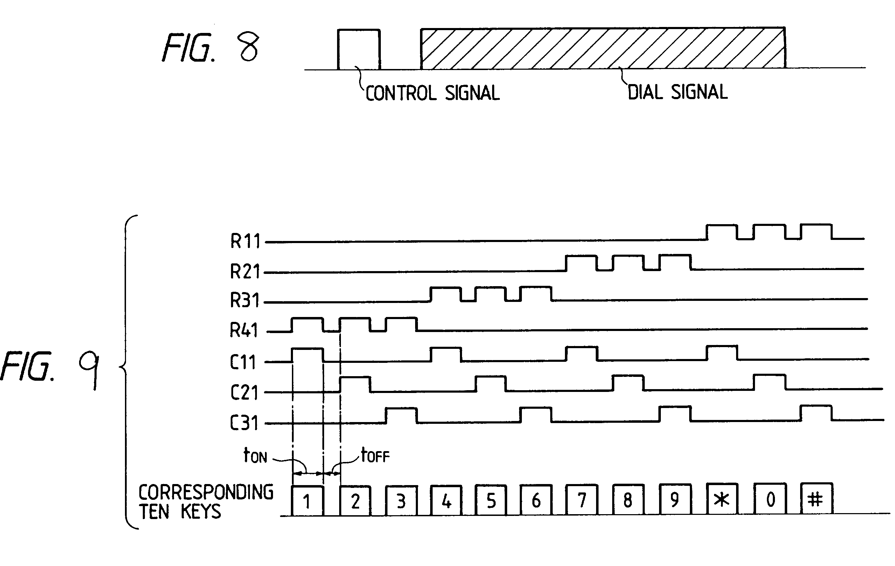

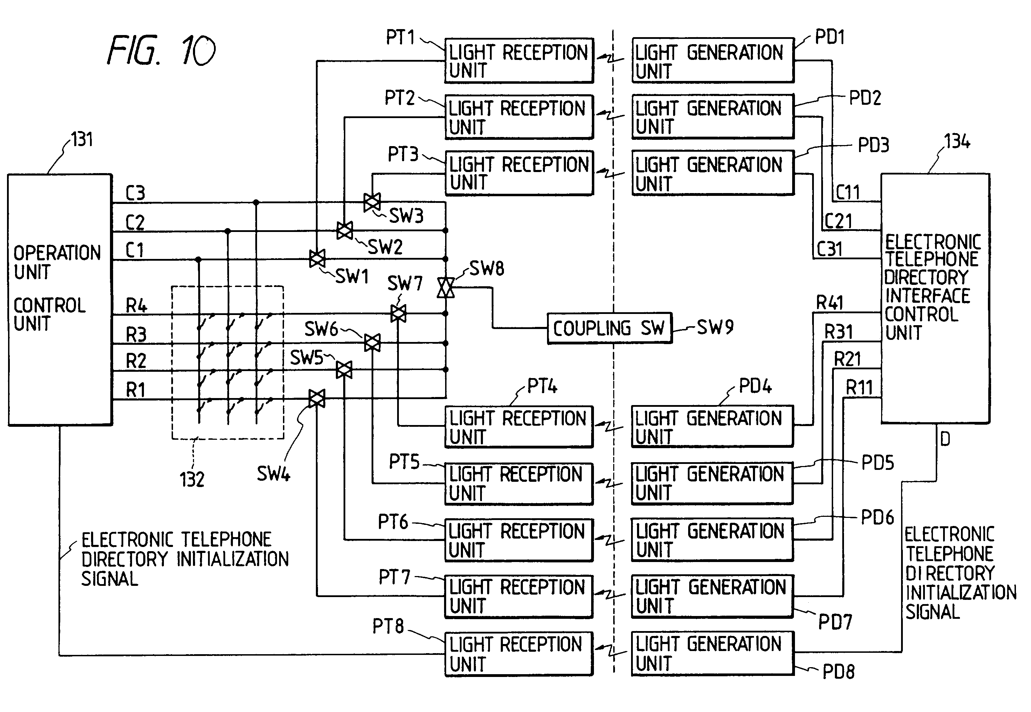

Figs. 8 and 9 are timing charts of the electronic telephone directory. As shown in Fig. 8 the electronic telephone directory 114 transmits signals while adding a control signal before dial signals. The control signal is a specific signal consisting of # or *, and starts from # or ∗ (in this embodiment, ∗ is used). That is, the electronic telephone directory sends dial signals like "∗03 786 8442". The dial signals are transmitted from the signal lines R11 to R41 and C11 to C31 of the electronic telephone directory interface control unit 134. As shown in the dial signal timing chart of Fig. 9 a combination of seven signals are decoded by the switches SW1 to SW7 shown in Fig. 6 and are converted into ten-key signals shown in the lower portion of Fig. 9 . The ten-key signals are then input to the operation unit control unit 131. The CPU 101 of the facsimile apparatus detects these signals.

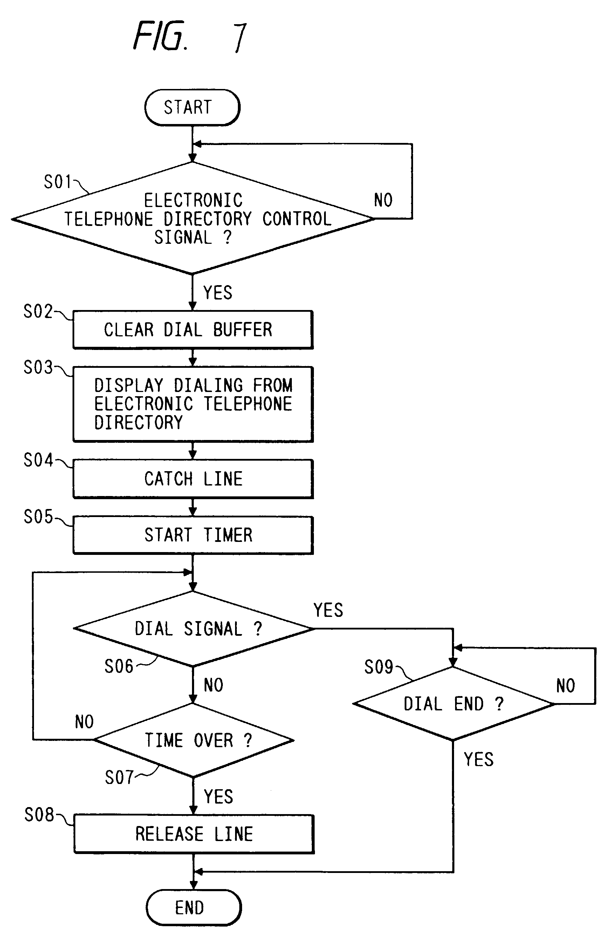

The CPU 101 of the facsimile apparatus is operated as shown in the flow chart of Fig. 7. In step S01, the CPU 101 monitors input of a control signal (*) from the electronic telephone directory 114. Upon reception of ∗, the CPU 101 determines start of dialing, and clears a dial buffer of the RAM 103 in step S02. In step S03, the CPU 101 causes the display unit 113 to indicate dialing from the electronic telephone directory. In step S04, the CPU 101 controls the NCU 109 to catch a line. In step S05, the CPU 101 starts an internal timer. If no dial signal is input when this timer is time up, the CPU 101 releases the line (steps S07 and S08). On the other hand, if the dial signal is detected in step S06, the CPU 101 accepts the dial signals until dialing is completed in step S09, and stores them in the dial buffer of the RAM 103. Upon reception of all the dial signals, the CPU 101 sends the dial signals from the dial buffer to the dialer of the NCU 109, thereby generating a call.

As described above, since the facsimile apparatus catches a line before the dial signals are input from the electronic telephone directory, a call can be generated when the dial signals are received. Since the dial buffer is cleared before the dial signals are input, dial information can be accurately stored in the buffer. Since the display unit 113 informs dialing from the electronic telephone directory to a user, the user can perform dialing from the electronic telephone directory.

### [Third Embodiment]

When an initialization switch is depressed, an electronic telephone directory of this embodiment generates a corresponding signal. On the other hand, upon reception of the signal, a facsimile apparatus clears a dial buffer, displays a dial signal reception state, and catches a telephone line to wait for dial signals from the electronic telephone directory.

The arrangements of the facsimile apparatus and the electronic telephone directory of this embodiment are common to those shown in Figs. 4 and 5.

Fig. 10 shows a block diagram of an interface portion between an operation unit 112 and an electronic telephone directory 114 of this embodiment. In the block diagram of Fig. 10, an electronic telephone directory initialization signal is output from a signal line D of an electronic telephone directory interface control unit 134 to an operation unit control unit 131 through units PD8 and PT8 in addition to the arrangement shown in the block diagram of Fig. 6.

The operation of this embodiment will be described below.

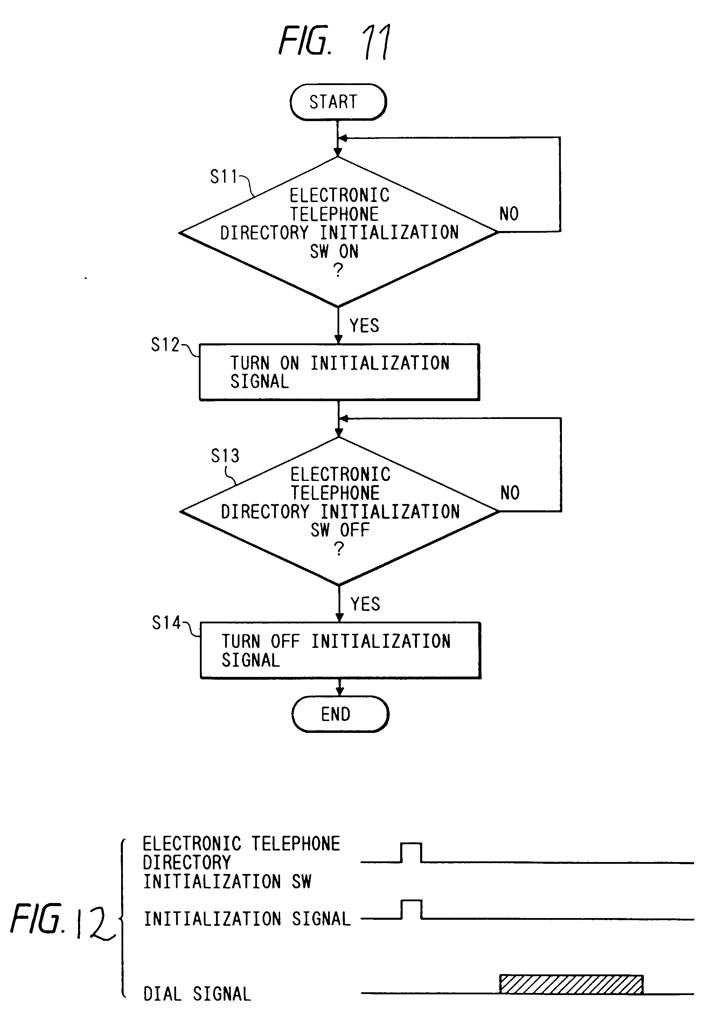

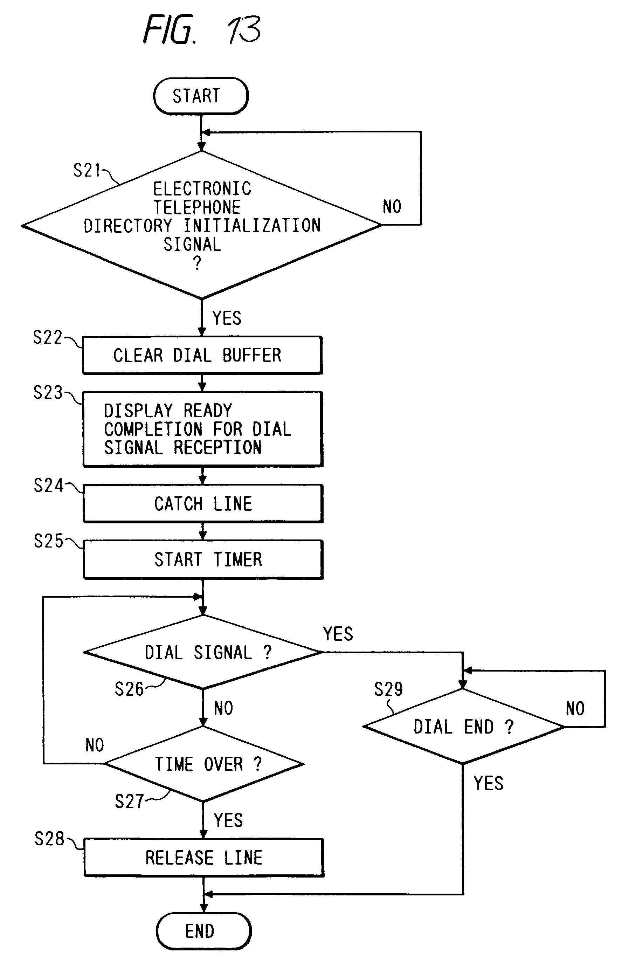

Fig. 11 is a flow chart showing the operation of the electronic telephone directory, and Fig. 12 is a timing chart thereof. A CPU 101 of the electronic telephone directory generates an initialization signal according to the flow chart. More specifically, when an electronic telephone directory initialization switch of an operation unit 126 of the electronic telephone directory is depressed in step S11, a CPU 121 turns on an initialization signal D in step S12. When the electronic telephone directory initialization switch is turned off in step S13, the CPU 121 turns off the initialization signal D. The relationship between the electronic telephone directory initialization switch and the initialization signal is as shown in the timing chart of Fig. 12. and thereafter, dial signals are generated. The initialization signal is output from an interface unit 127 to the communication apparatus. More specifically, the initialization signal is input from the interface control unit 134 to the operation unit control unit 131 through the units PD8 and PT8, as shown in Fig. 10.

The operation of the CPU 101 of the communication apparatus will be described below. Fig. 13 is a flow chart showing this operation. The CPU 101 checks in step S21 if the operation unit control unit 131 detects the initialization signal. If YES in step S21, the CPU 101 clears the dial buffer in step S22, and causes a display unit 113 to display completion of ready processing for dial signal reception in step S23. Furthermore, the CPU 101 catches a telephone line in step S24 to prepare for the following dialing operation. The CPU 101 starts a dialing standby timer in step S25. This timer is used to release the line when no dialing operation is performed. The CPU 101 checks in step S26 if a dial signal is detected, and checks in step S27 if the timer is time over. If YES in step S26, the CPU 101 checks end of dialing in step S29. If YES in step S29, the CPU 101 ends this routine. If YES in step S27, the CPU 101 releases the line in step S28.

As described above, the facsimile apparatus can catch a line before dial signals are input from the electronic telephone directory. Since the dial buffer is cleared before the dial signals are input, accurate dial information can be stored in the buffer. Since a dial information acceptable state can be signalled to a user, the user can dial from the electronic telephone directory after the facsimile apparatus is ready to accept the dial information. Thus, data exchange can be accurately performed.

The facsimile apparatus of the second and third embodiments catches a line upon reception of a control signal from the electronic telephone directory, but may catch a line upon reception of a telephone number from the electronic telephone directory. In this case, the CPU 101 sequentially stores the received telephone number from the start address of the dial memory. Upon completion of reception of the telephone number, the CPU 101 catches a line, and sends dial signals according to the received telephone number.

### [Fourth Embodiment]

An electronic telephone directory of this embodiment sends a signal corresponding to a clear key to a facsimile apparatus, and the facsimile apparatus resets the system upon detection of this signal.

The arrangements of the facsimile apparatus and the electronic telephone directory of this embodiment are common to those shown in Figs. 4 and 5.

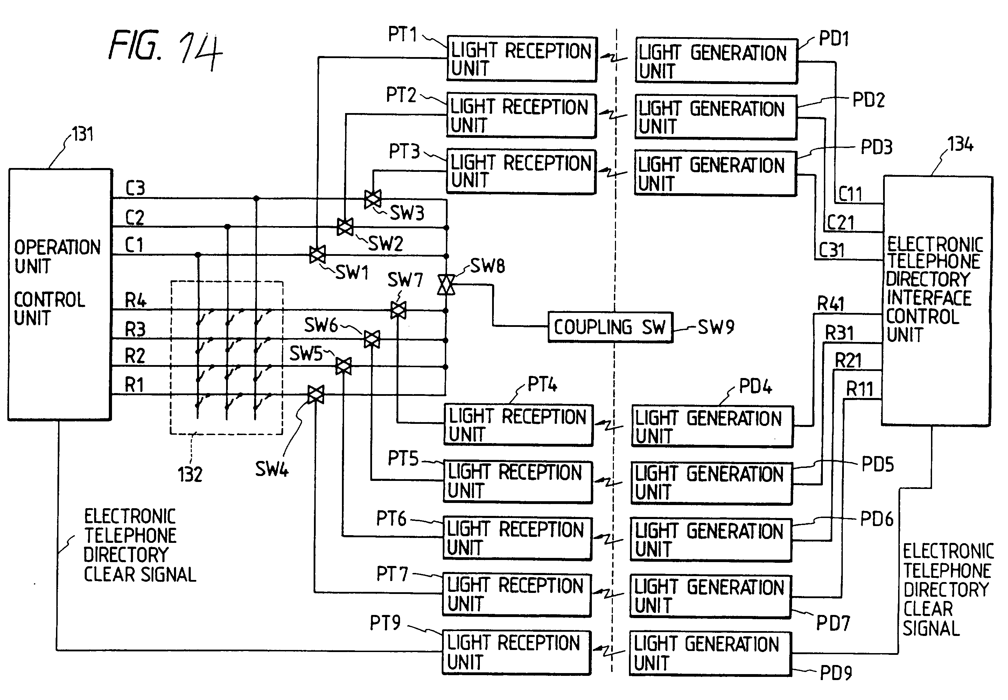

Fig. 14 is a block diagram of an interface portion between an operation unit 112 and an electronic telephone directory 114 of this embodiment. In the block diagram shown in Fig. 14 an electronic telephone directory interface control unit 134 outputs a clear signal of the electronic telephone directory to an operation unit control unit 131 through units PD9 and PT9 in addition to the arrangement shown in the block diagram of Fig. 6.

The operation of this embodiment will be described below.

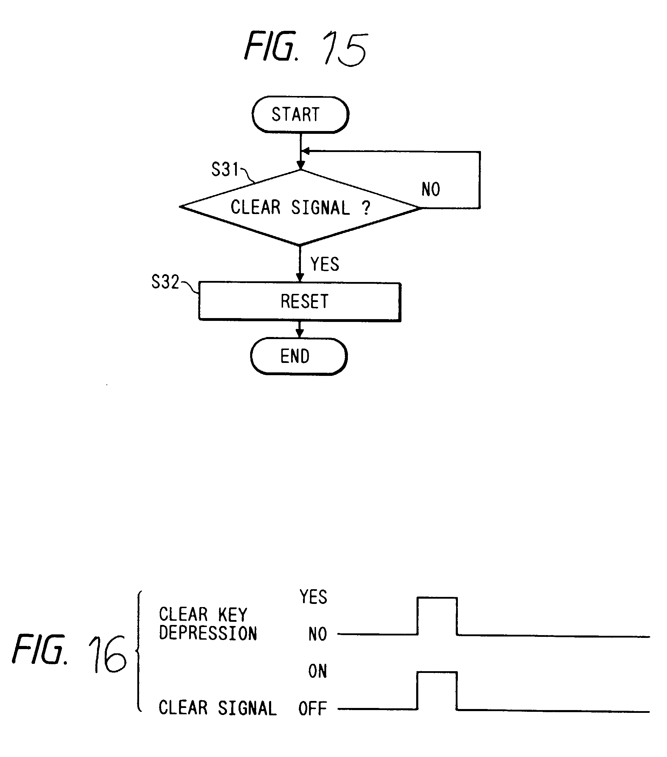

Fig. 15 is a flow chart showing the operation of the facsimile apparatus, and Fig. 16 is a timing chart of the electronic telephone directory. As shown in the timing chart of Fig. 16, when a clear key on an operation unit 126 of the electronic telephone directory is depressed, a CPU 121 sends a clear signal to the operation unit control unit 131 through the interface control unit 134 in response to the key operation. A CPU 101 of the facsimile apparatus monitors this clear signal in step S31 in Fig.15. Upon detection of the clear signal, the CPU 101 resets the system in step S32. In this case, if a line has been caught, the line is released, and the dial buffer is cleared.

As described above, since a clear key depression signal of the electronic telephone directory is supplied to the facsimile apparatus, a dialing error can be prevented when the clear key is depressed during data transfer from the electronic telephone directory to the facsimile apparatus.

As described above, in this embodiment, dial signals are generated on the basis of information generated by the electronic telephone directory. Therefore, a call can be accurately generated. Furthermore, in this embodiment, since not only a dial number but also control information are received from the electronic telephone directory, a call can be generated from the electronic telephone directory by utilizing various functions of the communication apparatus.

### [Fifth Embodiment]

The arrangements of a facsimile apparatus and an electronic telephone directory of this embodiment are common to those shown in Figs. 4 and 5.

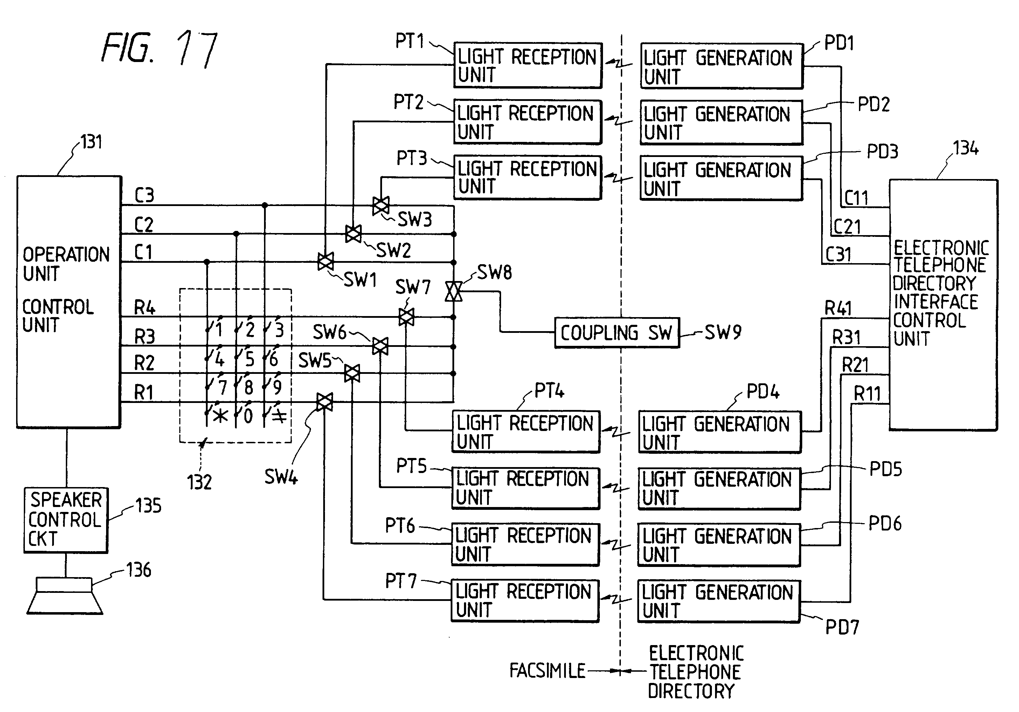

More specifically, a portable electronic telephone directory 114 is attached to an operation unit 112. The electronic telephone directory 114 is formed into a relatively thick card-like shape, and has, on its upper surface, a liquid crystal display unit 125 for displaying a destination and its telephone number, and various touch keys 126 for switching a display on the display unit and inputting data. The electronic telephone directory 114 is attached to an electronic telephone directory mounting portion of the operation unit 112, as shown in Fig. 17. When a transfer button of the electronic telephone directory 114 is depressed in an attached state, telephone number information which is being displayed on the liquid crystal display unit 125 is transferred to the operation unit 112.

The electronic telephone directory mounting portion is formed to have a relatively rectangular recess in correspondence with the low-profile shape of the electronic telephone directory 114, and receives the electronic telephone directory 114 to place it thereon. Therefore, as compared to a case wherein information is transferred in a card insertion state like in a conventional IC card, the electronic telephone directory 114 can be easily attached/detached, and a user can operate a transfer button or other keys while observing the display unit 125 arranged on the upper surface of the electronic telephone directory 114.

A plurality of light generation units are arranged on the lower surface of the electronic telephone directory 114 attached to the electronic telephone directory mounting portion in this state. On the other hand, light reception units corresponding to the light generation units are arranged on the mounting surface of the electronic telephone directory mounting portion. More specifically, in this embodiment, signal transfer is performed in a non-contact manner using photocouplers as a combination of these light generation units and light reception units.

Fig. 17 is a block diagram showing an arrangement of an interface portion between the electronic telephone directory 114 and the operation unit 112.

The electronic telephone directory 114 has seven light generation units PD1 to PD7 each comprising a photodiode, and the electronic telephone directory mounting portion of the operation unit 112 has seven light reception units PT1 to PT7 each comprising a phototransistor.

An interface control unit 134 in the electronic telephone directory 114 selectively outputs output signals C11 to C31 and R11 to R41 to the light generation units PD1 to PD7, thereby controlling switches SW1 to SW7 through the light generation units PD1 to PD7 and the light reception units PT1 to PT7. Thus, the switches SW1 to SW7 decode the output signals C11 to C31 and R11 to R41, and input the decoded signals to the control unit 131 of the operation unit 121 as key depression signals at a ten-key unit 132.

More specifically, an operator operates the ten-key unit 132 to selectively connect signal lines of time-divisional signals C11 to C31 and those of key depression signals R11 to R41. The control unit 131 time-divisionally monitors input of the key depression signals R11 to R41, and determines depressed keys. In place of the ten-key unit 132, the signal lines are selectively connected by the switches SW1 to SW7 to allow dial inputs in the same manner as normal ten-key inputs.

The electronic telephone directory mounting portion has a coupling switch SW9 for detecting a coupled state of the electronic telephone directory 114. When the coupling switch SW9 enables a switch SW8 and when the electronic telephone directory 114 is attached, the time-divisional signals C11 to C31 are supplied to the switches SW4 to SW7 of the key depression signals R11 to R41, thus allowing the above-mentioned dial inputs. In this embodiment, the dial inputs can be performed when the electronic telephone directory 114 is attached. Therefore, erroneous operations of the light reception units PT1 to PT7 due to external light can be prevented when the electronic telephone directory 114 is detached.

The operation unit 112 comprises a speaker control circuit 135 for outputting depression sounds according to dial inputs to the control unit 131, and a speaker 136. More specifically, the operation unit control unit 131 sends a key depression sound instruction signal to the speaker control circuit 135, and causes the speaker 136 to generate key depression sound corresponding to input dials.

In the above arrangement, when a call is generated using the electronic telephone directory 114, a display state of the liquid crystal display unit 125 is switched while the electronic telephone directory 114 is attached to the electronic telephone directory mounting portion or before the electronic telephone directory 114 is attached thereto, and a destination to be called and its telephone number are searched and called.

When the transfer button is depressed while the electronic telephone directory 114 is mounted on the electronic telephone directory mounting portion, the telephone number displayed on the liquid crystal display unit 125 is sequentially transferred to the operation unit 112, and is then supplied from the operation unit 112 to the CPU 101.

Upon transfer of the telephone number, key depression sounds are sequentially output from the speaker 136. Since the key depression sounds are common to those when a ten-key pad is normally operated, a user can determine that the telephone number input from the electronic telephone directory 114 is accurately received by the operation unit 112. When the key depression sounds end, the user can recognize end of transfer of the telephone number.

Note that the electronic telephone directory may generate a call from a communication apparatus other than the facsimile apparatus. Data transfer may be performed not in an optical system but in an electrical system. In addition to the above arrangement, a telephone number or a message indicating end of transfer received from the electronic telephone directory 114 may be displayed on a main apparatus, so that a user can check it.

As described above, when telephone number information is input from the electronic telephone directory to the main apparatus, the main apparatus generates key depression sounds common to those when a ten-key pad is operated. Thus, a user can easily determine that telephone number information is accurately transferred to the main apparatus.

### [Sixth Embodiment]

The arrangements of a facsimile apparatus and an electronic telephone directory of this embodiment are common to those shown in Figs. 4 and 5.

As shown in Fig. 9, in this embodiment, two of light generation units PD1 to PD7 of photocouplers are always turned on in response to any ten-key input. An ON time tₒₙ and an OFF time toff of the light generation units PD1 to PD7 are predetermined.

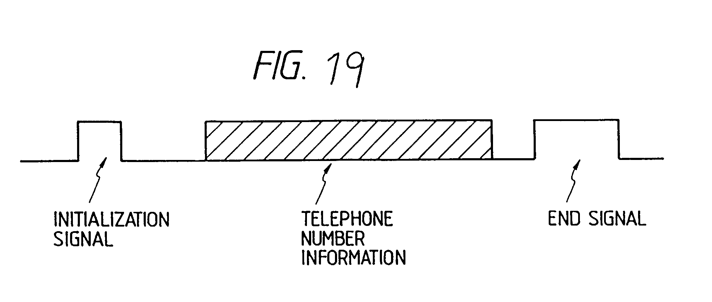

A photocoupler constituted by a light generation unit PD10 and a light reception unit PT10 transfers an initialization signal and an end signal from an electronic telephone directory 114 to an operation unit 112. In this embodiment, as shown in Fig. 19, the initialization signal is sent prior to transmission of telephone number information, and the end signal is transmitted upon completion of transfer of the telephone number information.

Therefore, after the initialization signal is input, the operation unit 112 monitors signal inputs by means of the light generation units PD1 to PD7 and light reception units PT1 to PT7 to accept input of telephone number information, and sequentially stores an input number in a RAM 103.

In this case, if a correct number is input, the ON time tₒₙ of the photocouplers reaches a predetermined time. This state is monitored by a CPU 101 of the facsimile apparatus, thus determining a correct input or an erroneous input.

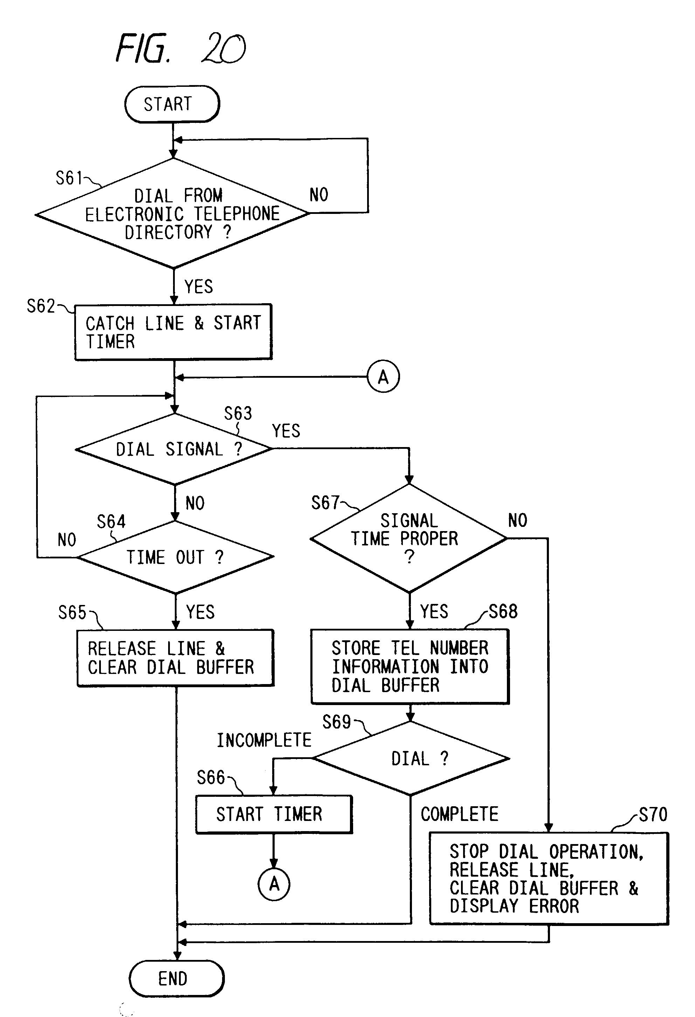

Fig. 20 is a flow chart for explaining an operation when a call is generated using the electronic telephone directory 114 with the above arrangement.

When a call is generated using the electronic telephone directory 114, a display state of a liquid crystal display unit 125 is switched while the electronic telephone directory 114 is mounted on the electronic telephone directory mounting portion or before the electronic telephone directory 114 is mounted thereon, and a destination to be called and its telephone number are searched and called.

When a transfer button is depressed while the electronic telephone directory 114 is mounted on the electronic telephone directory mounting portion, a telephone number displayed on the display unit 125 is sequentially transferred to the operation unit 112 and is then supplied from the operation unit 112 to the CPU 101 after the initialization signal is transferred.

When the CPU 101 detects input of the initialization signal (S61), it controls an NCU 109 to catch a line, and starts an internal timer (S62). This timer is used to end a call generation operation when no telephone number information is input within a predetermined period of time.

If telephone number information is input from the electronic telephone directory 114 (S63), a correct input or an erroneous input is checked on the basis of an ON time of the photocoupler, as described above. More specifically, when an erroneous input is made due to, e.g., external light, the ON time becomes longer than a predetermined period of time, and an error can be detected.

Therefore, if the CPU 101 determines that an input signal is an error, it interrupts a dial operation, releases the line, clears a telephone number already stored in a dial buffer (RAM), and displays an error on a display unit 113 (S70).

If the CPU 101 determines that an input signal is correct, it stores the input signal, i.e., telephone number information in the dial buffer (S68). If dial end data is not detected (S69), the CPU 101 restarts the timer (S66), and the flow returns to step S63 to wait for the next input.

If the timer is time over before an input signal is detected in step S63 (S64), the CPU 101 interrupts the dial operation, releases a line, and clears a telephone number already stored in the dial buffer, thus ending processing (S65).

Note that the electronic telephone directory of this embodiment can be applied to a communication apparatus other than the facsimile apparatus.

According to this embodiment, when an ON state of the photocoupler exceeds a predetermined period of time, input information is determined as an error. Therefore, a proper transfer operation can be performed from the electronic telephone directory to an apparatus main body so that the light reception units of the photocouplers are free from the influence of external light and the like.

The preferred embodiments of the present invention have been described. However, the present invention is not limited to the arrangements of the above embodiments, and various other changes and modifications may be made within the scope of the invention.

## Claims

1. A call generation apparatus in or on which a portable device (114) can be placed, comprising:
a keypad (132, 22) for input of a dial number;
reception means (131, 142) for receiving optical signals from the portable device when in place; and
sending means (109) for sending a dial signal onto a line (110) in accordance with matrix output signals from said keypad or optical dialling signals from said reception means, characterized in that
said reception means comprises a plurality of light receiving elements (PT1-PT7) connected in parallel to corresponding matrix lines of the keypad (132, 22), and the optical dialling signal is input into the sending means as a keypad matrix signal; and in that
the sending means further comprises means for catching the line in accordance with the output from said reception means before sending the dial signal.

2. An apparatus according to claim 1, wherein said optical signals comprise sequential data in a predetermined format.

3. An apparatus according to either of claims 1 or 2, further comprising display means for displaying a message in accordance with the output from said reception means.

4. An apparatus according to any preceding claim, further comprising generating means for generating check sounds when said sending means sends the dial signal in accordance with the output from said reception means.

5. An apparatus according to any preceding claim, wherein said sending means is adapted to stop sending of the dial signal on the basis of the output from said reception means.

6. An apparatus according to any preceding claims, further comprising means for inhibiting response to the input from the reception means when the portable device is not placed.

7. A portable device for sending dialling instructions to a call generation apparatus in or on which the device is placed, comprising a plurality of light emitting elements (PD1-PD7) and means for driving said light emitting elements to send numeric codes to said call generation apparatus, characterised in that said plurality of light emitting elements (PD1-PD7) are driven so as to correspond to respective matrix lines of a conventional dialling keypad (132, 22).

## Patentansprüche

1. Ruferzeugungsgerät, in das oder an dem eine tragbare Einrichtung (114) ein- oder angesetzt werden kann, mit:
einer Tastatur (132, 22) zur Eingabe einer Wählnummer;
Empfangsmitteln (131, 142) zum Empfang optischer Signale aus der tragbaren Einrichtung, wenn eingesetzt; und
Sendemitteln (109) zum Senden eines Wählsignals auf eine Leitung (110) gemäß Matrixausgangssignalen aus der Tastatur oder optischer Wählsignale aus den Empfangsmitteln,
**dadurch gekennzeichnet,** daß
das Empfangsmittel eine Vielzahl von Lichtempfangsmitteln (PT1 bis PT7) enthält, die parallel mit den zugehörigen Matrixleitungen der Tastatur (132, 22) verbunden sind, und wobei das optische Wählsignal in das Sendemittel als Tastaturmatrixsignal eingegeben wird; und dadurch, daß
das Sendemittel des weiteren über Mittel zur Belegung einer Leitung gemäß dem Ausgangssignal aus dem Empfangsmittel vor Senden des Wählsignals enthält.

2. Gerät nach Anspruch 1, bei dem die optischen Signale über sequentielle Daten in einem vorbestimmten Format verfügen.

3. Gerät nach einem der Ansprüche 1 oder 2, das des weiteren ausgestattet ist mit Anzeigemitteln zur Anzeige einer Meldung gemäß dem Ausgangssignal aus dem Empfangsmittel.

4. Gerät nach einem der vorstehenden Ansprüche, das des weiteren über Erzeugungsmittel zur Erzeugung von Prüftönen verfügt, wenn das Sendemittel das Wählsignal gemäß dem Ausgangssignal aus dem Empfangsmittel sendet.

5. Gerät nach einem der vorstehenden Ansprüche, dessen Sendemittel eingerichtet ist zur Beendigung des Sendens des Wählsignals auf der Grundlage des Ausgangssignals aus dem Empfangsmittel.

6. Gerät nach einem der vorstehenden Ansprüche, das des weiteren ausgestattet ist mit Mitteln zum Sperren abhängig vom Eingangssignal aus dem Empfangsmittel, wenn die tragbare Einrichtung nicht eingesteckt ist.

7. Tragbare Einrichtung zum Senden von Wählinformationen an ein Ruferzeugungsgerät, in oder an dem die Einrichtung eingesetzt ist, mit: einer Vielzahl von lichtemittierenden Elementen (PD1 bis PD7) und Mitteln zur Ansteuerung der lichtemittierenden Elemente zur Sendung numerischer Codes an das Ruferzeugungsgerät,
**dadurch gekennzeichnet,** daß
die Vielzahl lichtemittierender Elemente (PD1 bis PD7) so angesteuert werden, daß sie den jeweiligen Matrixleitungen einer herkömmlichen Wähltastatur (132, 22) entsprechen.

## Revendications

1. Appareil générateur d'appels dans lequel ou sur lequel peut être placé un dispositif portatif (114), comprenant:
un clavier (132, 22) pour l'entrée d'un numéro d'appel;
des moyens de réception (131, 142) pour recevoir des signaux optiques provenant du dispositif portatif lorsqu'il est en place; et
des moyens d'envoi (109) pour envoyer un signal de numérotation sur une ligne (110) conformément à des signaux de sortie matriciels provenant dudit clavier ou des signaux optiques de numérotation téléphonique provenant desdits moyens de réception, caractérisé en ce que
lesdits moyens de réception comprennent une pluralité d'éléments récepteurs de lumière (PT1 - PT7) connectés en parallèle à des lignes matricielles correspondantes du clavier (132, 22), et le signal optique de numérotation téléphonique est entré dans lesdits moyens d'envoi en tant que signal matriciel de clavier; et en ce que
lesdits moyens d'envoi comprennent en outre un moyen pour prendre la ligne conformément à la sortie provenant desdits moyens de réception avant l'envoi du signal de numérotation.

2. Appareil selon la revendication 1, dans lequel lesdits signaux optiques comprennent des données séquentielles dans un format prédéterminé.

3. Appareil selon l'une des revendications 1 et 2, comprenant en outre des moyens d'affichage pour afficher un message conformément à la sortie provenant desdits moyens de réception.

4. Appareil selon l'une quelconque des revendications précédentes, comprenant en outre des moyens générateurs pour engendrer des signaux sonores de vérification lorsque lesdits moyens d'envoi envoient le
signal de numérotation conformément à la sortie provenant desdits moyens de réception.

5. Appareil selon l'une quelconque des revendications précédentes, dans lequel lesdits moyens d'envoi sont adaptés pour arrêter l'envoi du signal de numérotation suivant la sortie provenant desdits moyens de réception.

6. Appareil selon l'une quelconque des revendications précédentes, comprenant en outre des moyens pour empêcher une réponse à l'entrée provenant des moyens de réception lorsque le dispositif portatif n'est pas en place.

7. Dispositif portatif pour envoyer des instructions de numérotation téléphonique à un appareil générateur d'appels dans lequel ou sur lequel est placé le dispositif, comprenant une pluralité d'éléments émetteurs de lumière (PD1 - PD7) et des moyens pour exciter lesdits éléments émetteurs de lumière afin d'envoyer des codes numériques audit appareil générateur d'appels, caractérisé en ce que ladite pluralité d'éléments émetteurs de lumière (PD1 - PD7) est excitée de manière à correspondre à des lignes matricielles respectives d'un clavier de numérotation téléphonique classique (132, 22).
